# EUROPEAN PATENT APPLICATION

(11) **EP 3 489 910 A1**
(43) Date of publication of application: **29.05.2019**
(21) Application number: 18196133.5
(22) Date of filing: 23.09.2018
(51) Int. Cl.: G07B 15/06

(54) **IN-VEHICLE COMMUNICATION DEVICE AND TOLL COLLECTING METHOD**

(30) Priority: 24.11.2017 JP 2017225413
(71) Applicant: Renesas Electronics Corporation, 135-0061 Tokyo (JP)
(72) Inventor: SAGESAKA, Yasuhiro, Tokyo, 135-0061 (JP); FURUTA, Shigeru, Tokyo, 135-0061 (JP)
(74) Representative: Betten & Resch

(57) **Abstract**

An object of the present invention is to reduce the number of errors generated in an in-vehicle communication device due to a communication failure between the in-vehicle communication device and an IC card. The in-vehicle communication device has a communication unit that performs a first communication with a roadside machine, an interface that performs a second communication with an IC card, a non-volatile memory, and a processing unit that executes a process of collecting a toll using the communication unit. The processing unit stores predetermined information stored in the IC card into the non-volatile memory, uses the information stored in the non-volatile memory when executing a process using the communication unit, and writes the information stored in the non-volatile memory into the IC card at, at least, either timing when the power supply of the in-vehicle communication device 1 is switched to on or off.

## Description

### CROSS-REFERENCE TO RELATED APPLICATIONS

The disclosure of Japanese Patent Application No. 2017-225413 filed on November 24, 2017 including the specification, drawings and abstract is incorporated herein by reference in its entirety.

### BACKGROUND

The present invention relates to an in-vehicle communication device and a toll collecting method, and relates to, for example, an in-vehicle communication device that communicates with a roadside machine.

In order to use an ETC (Electronic Toll Collection System) that is a system automatically collecting a toll of a toll road such as an expressway, an in-vehicle communication device (in-vehicle device) used to communicate with a roadside machine is mounted in a vehicle. The in-vehicle communication device uses information stored in an IC (integrated circuit) card issued by a credit card company or the like when communicating with the roadside machine.

Generally, there are two kinds of IC cards such as a contact-type IC card and a contactless IC card, and the contact-type IC card is used for an ETC. Therefore, an electric contact failure occasionally occurs at a contact point between the IC card and the in-vehicle communication device due to vibrations during the travelling of the vehicle. In this case, the following problem may occur: the information stored in the IC card cannot be read, and thus a toll collecting process cannot be correctly performed, or a bar provided at a lane in a gate is not opened.

In order to solve such a problem, Japanese Unexamined Patent Application Publication No. 2009-043161 discloses an in-vehicle device provided with a loading mechanism that ejects an IC card and inserts the same again when a contact failure is detected.

### SUMMARY

However, in the in-vehicle device described in Japanese Unexamined Patent Application Publication No. 2009-043161, communications between the IC card and the in-vehicle device occur every time communications with a roadside machine provided at a gate are performed. Therefore, there is a possibility that an error occurs in the in-vehicle device due to a contact failure every time the vehicle passes through the gate. Namely, there is a risk that a communication failure occurs between the IC card and the in-vehicle device every time the vehicle passes through the gate.

The other problems and novel features will become apparent from the description of the specification and the accompanying drawings.

According to an embodiment, an in-vehicle communication device stores predetermined information stored in an IC card into a non-volatile memory, uses the information stored in the non-volatile memory when executing a process using a communication unit, and writes the information stored in the non-volatile memory into the IC card at, at least, either timing when the power supply of the in-vehicle communication device is switched to on or off.

According to the embodiment, the number of errors generated in the in-vehicle communication device due to a communication failure between the in-vehicle communication device and the IC card can be reduced.

### BRIEF DESCRIPTION OF THE DRAWINGS

Fig. 1 is a block diagram for showing an example of a configuration of an in-vehicle communication device according to an outline of an embodiment;
Fig. 2 is a block diagram for showing an example of a configuration of a vehicle system according to the embodiment;
Fig. 3 is a block diagram for showing an example of a configuration of an in-vehicle communication device according to a first embodiment that realizes an ETC/DSRC communication function;
Fig. 4 is a flowchart for showing an example of an operation of the in-vehicle communication device according to the first embodiment;
Fig. 5 is a flowchart for showing another example of the operation of the in-vehicle communication device according to the first embodiment;
Fig. 6 is a block diagram for showing an example of a configuration of an in-vehicle communication device according to a second embodiment that realizes the ETC/DSRC communication function;
Fig. 7 is a block diagram for showing an example of a configuration of an in-vehicle communication device according to a third embodiment that realizes the ETC/DSRC communication function; and
Fig. 8 is a block diagram for showing an example of a microcomputer system that can be used in each embodiment.

### DETAILED DESCRIPTION

In order to clarify the explanation, the following description and drawings will be appropriately omitted and simplified. It should be noted that the same elements will be followed by the same signs in each drawing, and duplicated explanation will be omitted as needed.

### <Outline of embodiments>

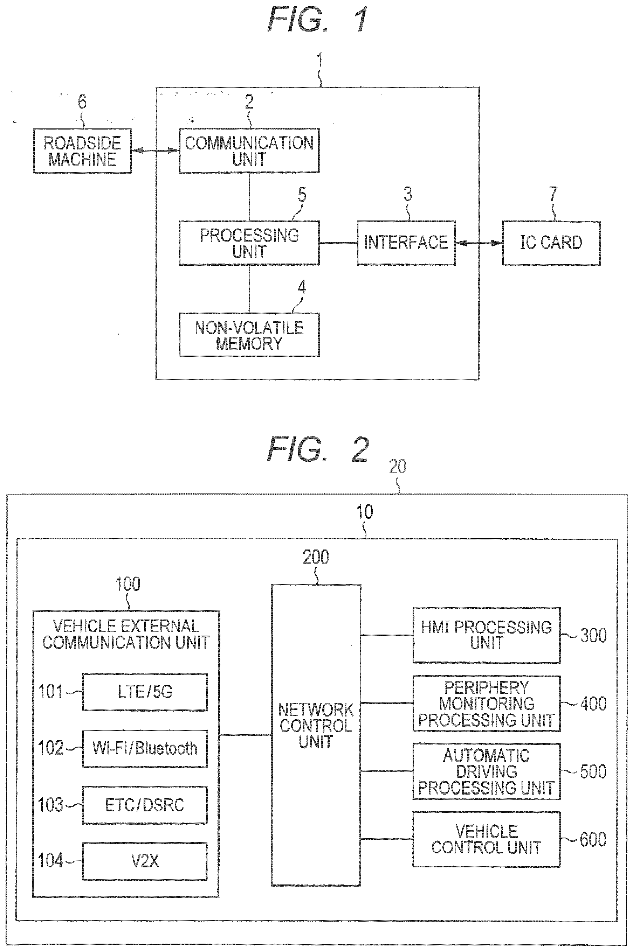

First, prior to the detailed explanation of embodiments, an outline of the embodiments will be described. Fig. 1 is a block diagram for showing an example of a configuration of an in-vehicle communication device 1 according to the outline of the embodiments. It should be noted that Fig. 1 illustrates not only the in-vehicle communication device 1 but also a roadside machine 6 and an IC card 7 to be communicated with the in-vehicle communication device 1.

The roadside machine 6 is a roadside machine of a system that automatically collects a toll of a toll road, and is an apparatus that is communicated with the in-vehicle communication device 1 mounted in a vehicle entering the inside of a communication area in accordance with a predetermined communication system. Further, the IC card 7 is a card in which predetermined information for using the system that automatically collects a toll of a toll road is stored. The IC card 7 is, for example, a so-called ETC card.

As shown in Fig. 1, the in-vehicle communication device 1 has a communication unit 2, an interface 3, a non-volatile memory 4, and a processing unit 5.

The communication unit 2 is a constitutional element that is communicated with the roadside machine 6. Further, the interface 3 is an interface that is communicated with the IC card 7. It should be noted that the IC card 7 may be a contact-type IC card or a contactless IC card. Thus, the interface 3 may be an interface through which information is input and output to/from a storage circuit of the contact-type IC card, or an interface through which information is input and output to/from a storage circuit of the contactless IC card.

The processing unit 5 executes a process (charging process) for collecting a toll using the communication unit 2. Here, prior to the process for collecting a toll, the processing unit 5 reads the above-described predetermined information stored in the IC card 7 through the interface 3, and stores the same into the non-volatile memory 4 in advance. In addition, the processing unit 5 uses first storage information or second storage information during the execution of the above-described charging process using the communication unit 2.

Here, the first storage information is the above-described predetermined information stored into the non-volatile memory 4 after being read from the IC card 7, and the second storage information is information stored into the non-volatile memory 4 after being obtained in the above-described charging process. The second storage information is, for example, data obtained in communications with the roadside machine 6. The second storage information can be regarded as information obtained by updating the first storage information. Namely, the processing unit 5 executes the process for collecting a toll using the information stored into the non-volatile memory 4 after being read from the IC card 7 or information obtained by updating the information.

Further, the processing unit 5 writes the above-described second storage information stored in the non-volatile memory 4 into the IC card 7 through the interface 3 at, at least, either timing when the power supply of the in-vehicle communication device 1 is switched to on or off . Namely, the in-vehicle communication device 1 can update the storage information of the IC card 7 without writing the information into the IC card 7 every time the communications with the roadside machine 6 are performed.

As described above, the information stored in the IC card 7 is stored into the non-volatile memory 4 once in the in-vehicle communication device 1. In addition, the communications with the roadside machine 6 are performed using the information stored in the non-volatile memory 4. Therefore, the in-vehicle communication device 1 can communicate with the roadside machine 6 without reading the information of the IC card 7. Therefore, even if a communication failure between the in-vehicle communication device 1 and the IC card 7 occurs due to vibrations during the travelling of the vehicle prior to the communications with the roadside machine 6, the in-vehicle communication device 1 can normally communicate with the roadside machine 6 using the information copied to the non-volatile memory 4 in advance.

Further, since the information of the IC card 7 is copied to the non-volatile memory 4, the information copied from the IC card 7 and the information obtained in the communications with the roadside machine 6 can be kept even if a key switch of the vehicle is turned off and the power supply of the in-vehicle communication device 1 is disconnected in, for example, a rest stop in a toll road section. Here, a situation where the power supply of the vehicle is turned off to make a stop at a rest stop in a period from the time the vehicle communicates with the roadside machine 6 of an entrance to a toll road to the time the vehicle communicates with a different roadside machine 6 of an exit will be exemplified. In general, a system that automatically collects a toll of a toll road requires information specifying the point of an entrance obtained in the communications with the roadside machine 6 of the entrance of the toll road when communicating with a different roadside machine 6 of an exit of the toll road. Thus, in the case where the information specifying the point of an entrance is stored in a volatile memory, the power supply of the in-vehicle communication device 1 is disconnected when the power supply of the vehicle is turned off, and the information disappears. On the other hand, in the case where the information specifying the point of an entrance is written into the IC card 7 immediately after the communications with the roadside machine 6 of the entrance, the communications with the roadside machine 6 of an exit using the information cannot be performed when a communication failure occurs between the IC card 7 and the in-vehicle communication device 1 after the vehicle passes through the roadside machine 6 of the entrance. On the contrary, the information specifying the point of an entrance obtained in the communications with the roadside machine 6 of the entrance is stored into the non-volatile memory 4 of the in-vehicle communication device 1 as the second storage information. Therefore, even if the communications between the IC card 7 and the in-vehicle communication device 1 are interrupted or the power supply of the in-vehicle communication device 1 is disconnected once, the in-vehicle communication device 1 can normally communicate with the roadside machine 6 of an exit.

Further, the information (for example, the information specifying the point of an entrance, the information specifying the point of an exit, or the like) obtained in the process by the processing unit 5 of the in-vehicle communication device 1 is written into the IC card 7 at, at least, either timing when the power supply of the in-vehicle communication device 1 is switched to on or off. Namely, it is not necessary to write the information into the IC card 7 every time the in-vehicle communication device 1 communicates with the roadside machine 6. Therefore, the number of errors generated when the information is written into the IC card 7 due to a communication failure can be reduced.

As described above, the in-vehicle communication device 1 does not need to communicate with the IC card 7 when communicating with the roadside machine 6. Namely, the in-vehicle communication device 1 does not need to access the IC card 7 every time the communications with the roadside machine 6 are performed. Therefore, the number of errors in the in-vehicle communication device 1 generated due to a communication failure between the in-vehicle communication device 1 and the IC card 7 can be reduced.

### <First Embodiment>

Next, an embodiment will be described in detail. Fig. 2 is a block diagram for showing an example of a configuration of a vehicle system 10 according to a first embodiment. The vehicle system 10 is a system mounted in a vehicle 20. The vehicle system 10 includes a vehicle external communication unit 100, a network control unit 200, an HMI (Human Machine Interface) processing unit 300, a periphery monitoring processing unit 400, an automatic driving processing unit 500, a vehicle control unit 600, and the like, and these units control the entire vehicle 20 by transferring data or a command through the network control unit 200.

The vehicle external communication unit 100 has a plurality of different communication functions, and communicates with apparatuses outside the vehicle 20. In the embodiment, the vehicle external communication unit 100 has an LTE (Long Term Evolution)/5G (fifth generation mobile communication system) communication function 101, a Wi-Fi/Bluetooth (registered trademark) communication function 102, an ETC (Electronic Toll Collection System)/DSRC (Dedicated Short Range Communications) communication function 103, and a V2X (Vehicle-to-everything) communication function 104.

The LTE/5G communication function 101 is a communication function using a mobile phone network. The Wi-Fi/Bluetooth communication function 102 is a function to communicate with a hot spot outside the vehicle using Wi-Fi communications or Bluetooth communications. It should be noted that the Wi-Fi/Bluetooth communication function 102 may communicate with a device inside the vehicle. The ETC/DSRC communication function 103 and the V2X communication function 104 are communication functions for ITS (Intelligent Transport Systems). The vehicle 20 communicates with a roadside machine using the ETC/DSRC communication function 103. Further, the vehicle 20 communicates with a roadside machine or another vehicle using the V2X communication function 104.

The network control unit 200 is communicably connected to the vehicle external communication unit 100, the HMI processing unit 300, the periphery monitoring processing unit 400, the automatic driving processing unit 500, and the vehicle control unit 600, and controls transmission and reception of information among these units.

The HMI processing unit 300 performs a process to provide a passenger of the vehicle 20 with information. For example, the HMI processing unit 300 performs a display process for a display provided inside the vehicle 20. It should be noted that the display process may include a process of displaying navigation information and map information. For example, the HMI processing unit 300 performs a process of displaying information obtained in the communications of the vehicle external communication unit 100.

The periphery monitoring processing unit 400 performs a process of ADAS (Advanced driver-assistance systems) . Specifically, the periphery monitoring processing unit 400 monitors the periphery of the vehicle 20 using information obtained from a camera, a sensor, and the like provided inside the vehicle 20, and executes a predetermined process on the basis of the monitoring result.

The automatic driving processing unit 500 performs a process for automatic driving of the vehicle 20. For example, the automatic driving processing unit 500 controls the vehicle 20 to travel along a predetermined route.

The vehicle control unit 600 controls constitutional elements such as a brake, an accelerator, and a steering to drive the vehicle 20.

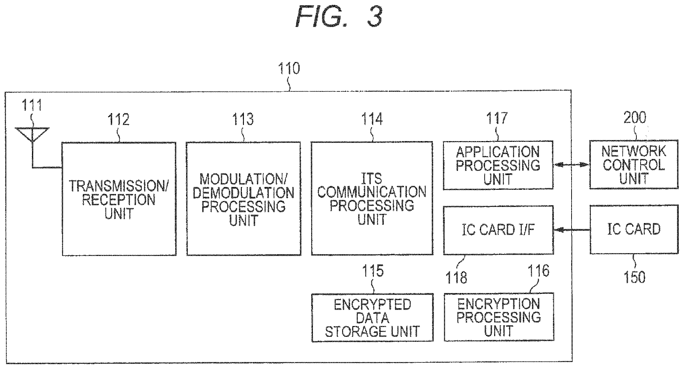

Next, the ETC/DSRC communication function 103 will be described in detail. Fig. 3 is a block diagram for showing an example of a configuration of an in-vehicle communication device 110 realizing the ETC/DSRC communication function 103. It should be noted that the in-vehicle communication device 110 corresponds to the in-vehicle communication device 1 of Fig. 1.

The in-vehicle communication device 110 is a communication device to perform communications in ITS, and has an antenna 111, a transmission/reception unit 112, a modulation/demodulation processing unit 113, an ITS communication processing unit 114, an encrypted data storage unit 115, an encryption processing unit 116, an application processing unit 117, and an IC card I/F 118.

The antenna 111 is an antenna to transmit and receive radio waves used to communicate with an ETC roadside machine or a DSRC roadside machine. The transmission/reception unit 112 is a transmission/reception circuit to communicate with an ETC roadside machine or a DSRC roadside machine using the antenna 111. In Japan, use of 5.8 GHz radio waves is specified in communications with an ETC roadside machine and a DSRC roadside machine. Therefore, the circuit of the transmission/reception unit 112 is configured to transmit and receive signals in the 5 GHz band in the embodiment, and 5.8 GHz signals are transmitted and received by the transmission/reception unit 112.

The modulation/demodulation processing unit 113 is a circuit to perform a modulation process of a transmission signal and a demodulation process of a reception signal. Namely, the modulation/demodulation processing unit 113 performs a modulation process for a signal transmitted by the transmission/reception unit 112. Further, the modulation/demodulation processing unit 113 performs a demodulation process for a signal received by the transmission/reception unit 112. As modulation systems, for example, the modulation/demodulation processing unit 113 uses ASK (Amplitude Shift Keying) in the case of communications with an ETC roadside machine and QPSK (Quadrature Phase Shift Keying) in the case of communications with a DSRC roadside machine. Here, the ETC roadside machine is an ETC-dedicated roadside machine, and is installed at a gate of a toll road such as an expressway to perform communications, with the in-vehicle communication device 110, necessary for a charging process when the vehicle enters or gets off the toll road. In addition, the DSRC roadside machine is a roadside machine to provide a vehicle with various pieces of information such as congestion information of an expressway or a general road, and may be provided with an ETC function. Namely, the DSRC roadside machine is installed at a gate of a toll road such as an expressway to perform communications, with the in-vehicle communication device 110, necessary for a charging process when the vehicle enters or gets off the toll road in some cases. In the embodiment, attention is paid to communications between an ETC roadside machine and the in-vehicle communication device 110, and thus the roadside machine means a roadside machine provided with an ETC function unless otherwise specified in the following description. Namely, the roadside machine may be an ETC roadside machine or a DSRC roadside machine provided with an ETC function in the following description.

The ITS communication processing unit 114 performs a process in accordance with a predetermined communication protocol. Namely, in the case where the ITS communication processing unit 114 communicates with an ETC roadside machine, the ITS communication processing unit 114 performs a process in accordance with a predetermined communication protocol for communications with the ETC roadside machine. In the case where the ITS communication processing unit 114 communicates with a DSRC roadside machine, the ITS communication processing unit 114 performs a process in accordance with a predetermined communication protocol for communications with the DSRC roadside machine. The modulation/demodulation processing unit 113 performs a modulation process for a signal output from the ITS communication processing unit 114. Further, the ITS communication processing unit 114 performs a process for a signal demodulated by the modulation/demodulation processing unit 113.

It should be noted that the antenna 111, the transmission/reception unit 112, the modulation/demodulation processing unit 113, and the ITS communication processing unit 114 correspond to the communication unit 2 of Fig. 1, and communicate with a roadside machine.

The encryption processing unit 116 is an encryption processing engine (encryption operation circuit) that performs a predetermined encryption process for data. For example, the encryption processing unit 116 performs a predetermined encryption process for data read from the IC card 150, and generates data obtained by encrypting the data. Further, the encrypted data storage unit 115 is a storage unit that stores secure data, and stores, for example, the data encrypted by the encryption processing unit 116. The encrypted data storage unit 115 is configured using a non-volatile memory. It should be noted that the non-volatile memory includes, for example, a flash memory. However, the present invention is not limited thereto. Further, the encrypted data storage unit 115 is a non-volatile memory with the security tamper resistant secured. It should be noted that the non-volatile memory with the tamper resistant secured may be, for example, an SAM (Secure Application Module) system generally incorporated in a microcomputer or an SOC (System-on-a-chip). It should be noted that the encrypted data storage unit 115 corresponds to the non-volatile memory 4 of Fig. 1.

The IC card I/F 118 is an interface to read data stored in the IC card 150. In the embodiment, the IC card 150 is a contact-type IC card. Therefore, the IC card I/F 118 is an interface that is electrically connected to the IC card 150 to communicates with the contact-type IC card 150. It should be noted that the IC card I/F 118 corresponds to the interface 3 of Fig. 1.

The IC card 150 stores predetermined information (hereinafter, referred to as IC card information) such as personal information for using ETC, namely, a system that automatically collects a toll of a toll road. The IC card 150 is a so-called ETC card. The IC card I/F 118 reads information stored in the IC card 150, and writes information into the IC card 150.

The application processing unit 117 performs various processes in accordance with application software. For example, the application processing unit 117 may perform a predetermined process for information received from another constitutional element inside the vehicle through the network control unit 200. Further, for example, the application processing unit 117 performs an authentication process to communicate with a roadside machine. For example, the application processing unit 117 performs an authentication process for the IC card 150 and the roadside machine using authentication information preliminarily stored in the encrypted data storage unit 115. In the case where the authentication succeeds, the application processing unit 117 communicates with the IC card 150 or the roadside machine.

Further, the application processing unit 117 corresponds to the processing unit 5 of Fig. 1, and executes a predetermined process (hereinafter, referred to as a charging process) to collect a toll by communicating with the roadside machine. Here, the application processing unit 117 copies the IC card information to the encrypted data storage unit 115 prior to the charging process. Specifically, the application processing unit 117 reads the IC card information stored in the IC card 150 through the IC card I/F 118 prior to the charging process. For example, when the power supply of the in-vehicle communication device 110 is turned on, the application processing unit 117 reads the IC card information from the IC card 150. Next, the application processing unit 117 encrypts the read IC card information using the encryption processing unit 116. In addition, the application processing unit 117 stores the encrypted IC card information into the encrypted data storage unit 115. It should be noted that the application processing unit 117 may read the IC card information and may store the information into the encrypted data storage unit 115 not only when the power supply is turned on, but also when the IC card 150 is inserted into the in-vehicle communication device 110 in a state where the power supply is turned on. Further, when the IC card information from the IC card 150 is stored into the encrypted data storage unit 115 that is a non-volatile memory, the process may be performed through an arbitrary volatile memory such as a RAM (Random Access Memory) .

When the charging process is executed, the application processing unit 117 communicates with the roadside machine using the IC card information stored in the encrypted data storage unit 115 after being read from the IC card 150 or the information stored in the encrypted data storage unit 115 after being obtained in the charging process by the application processing unit 117. It should be noted that the information obtained in the charging process by the application processing unit 117 may be, for example, entrance information obtained by communicating with the roadside machine provided at a gate of an entrance of a toll road when the vehicle passes through the gate. It should be noted that the entrance information is information to specify the point of the entrance. As the charging process when the vehicle 20 passes through the gate of the entrance of the toll road, the application processing unit 117 transmits, for example, the IC card information stored in the encrypted data storage unit 115 to the roadside machine and obtains the entrance information from the roadside machine. The application processing unit 117 allows the encryption processing unit 116 to encrypt the information (for example, the entrance information) obtained in the charging process, and stores the encrypted information into the encrypted data storage unit 115. Further, as the charging process when the vehicle 20 passes through the gate of the entrance of the toll road, the application processing unit 117 transmits, for example, the IC card information stored in the encrypted data storage unit 115 and the entrance information stored in the encrypted data storage unit 115 to the roadside machine and obtains exit information from the roadside machine. It should be noted that the exit information is information to specify the point of the exit.

Further, the application processing unit 117 writes the information stored in the encrypted data storage unit 115 into the IC card 150 through the IC card I/F 118 at, at least, either timing when the power supply of the in-vehicle communication device 110 is switched to on or off. It should be noted that the information to be written into the IC card 150 is specifically the information (for example, the entrance information, the exit information, and the like) obtained in the charging process by the application processing unit 117. Use history including the entrance information, the exit information, and the like is generally recorded in an ETC card. In the embodiment, the information stored in the encrypted data storage unit 115 is written into the IC card 150 by the application processing unit 117, and thus such use history can be recorded into the IC card 150.

It should be noted that the writing of the information stored in the encrypted data storage unit 115 into the IC card 150 when the power supply of the in-vehicle communication device 110 is switched to off is preferable because of the following reason.

It is assumed that a contact failure occurs between the IC card 150 and the IC card I/F 118 due to vibrations during the travelling before the power supply of the in-vehicle communication device 110 is turned off. In this case, even if the writing into the IC card 150 is attempted at timing when the power supply of the in-vehicle communication device 110 is turned off, the information cannot be written due to the contact failure. By the way, a user may insert or eject the IC card 150 due to a write error notified from the in-vehicle communication device 110. Alternatively, a user may insert the IC card 150 into the in-vehicle communication device 110 when the user drives the vehicle again after ejecting the IC card 150 to avoid theft when leaving the parked vehicle. Therefore, there is a high possibility that the IC card 150 is inserted or ejected in a state where the power supply of the in-vehicle communication device 110 is turned off as compared to a case in which the power supply thereof is turned on. Namely, before the power supply of the in-vehicle communication device 110 is switched from off to on, namely, in a state where the power supply of the in-vehicle communication device 110 is turned off, there is a possibility that a user inserts or ejects the IC card 150 into/from the in-vehicle communication device 110. In addition, there is a possibility that the contact failure is resolved by inserting the IC card 150 into the in-vehicle communication device 110 again. Thus, the writing of information can be more reliably performed by writing the information stored in the encrypted data storage unit 115 into the IC card 150 when the power supply of the in-vehicle communication device 110 is switched to on.

It should be noted that the application processing unit 117 may write the information stored in the encrypted data storage unit 115 into the IC card 150 not only when the power supply is turned on in a state where the IC card 150 is being inserted into the in-vehicle communication device 110, but also when the IC card 150 is inserted into the in-vehicle communication device 110 in a state where the power supply is turned on.

The ITS communication processing unit 114 and the application processing unit 117 may be implemented by software programs. For example, the in-vehicle communication device 110 may be provided with a processor and a memory, and the ITS communication processing unit 114 and the application processing unit 117 may perform the above-described processes by allowing the processor to execute the programs stored in the memory.

Further, the above-described program can be stored and supplied to a computer using various types of non-transitory computer readable media. The non-transitory computer readable media include various types of tangible recording media. Examples of the non-transitory computer readable media include a magnetic recording medium (for example, a flexible disc, a magnetic tape, or a hard disk drive), a magneto-optical recording medium (for example, a magneto-optical disc), a CD-ROM (Read Only Memory), a CD-R, a CD-R/W, and a semiconductor memory (for example, a mask ROM, a PROM (Programmable ROM), an EPROM (Erasable PROM), a flash ROM, or a RAM (Random Access Memory)). Further, the program may be supplied to a computer by various types of transitory computer readable media. Examples of the transitory computer readable media include an electrical signal, an optical signal, and an electromagnetic wave. The program can be supplied to a computer by the transitory computer readable media via a wired communication path such as a wire or an optical fiber, or a wireless communication path.

It should be noted that the ITS communication processing unit 114 and the application processing unit 117 may execute the above-described processes using hardware circuits or a configuration obtained by combining software and hardware.

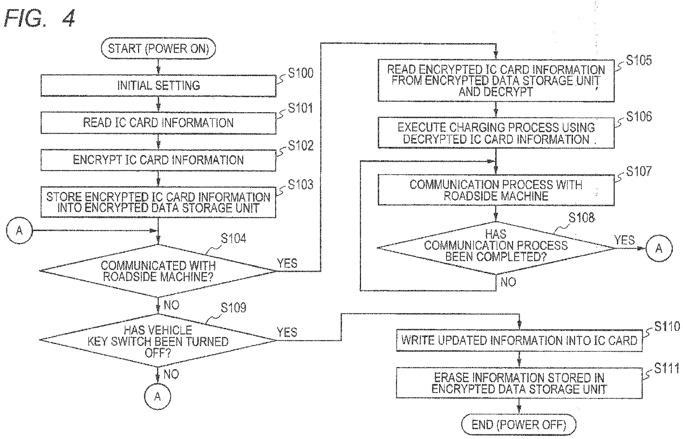

Next, an operation of the in-vehicle communication device 110 will be described. Fig. 4 is a flowchart for showing an example of the operation of the in-vehicle communication device 110. Hereinafter, the operation of the in-vehicle communication device 110 will be described in accordance with the flowchart shown in Fig. 4.

When the power supply of the in-vehicle communication device 110 is turned on, initial setting of the in-vehicle communication device 110 is performed in the Step 100 (S100) . It should be noted that the operation of the in-vehicle communication device 110 will be described on the assumption that the IC card 150 is being inserted into the in-vehicle communication device 110. However, in the case where the IC card 150 is not being inserted into the in-vehicle communication device 110, the in-vehicle communication device 110 may notify a user of not being inserted by using voice or an alarm.

Next, the application processing unit 117 reads the IC card information stored in the IC card 150 in Step 101 (S101).

Next, the application processing unit 117 encrypts the read IC card information using the encryption processing unit 116 in Step 102 (S102) .

In addition, the application processing unit 117 stores the encrypted IC card information into the encrypted data storage unit 115 in Step 103 (S103).

Next, the ITS communication processing unit 114 monitors the presence or absence of communications with the roadside machine in Step 104 (S104) . In the case where the communications between the in-vehicle communication device 110 and the roadside machine have occurred, the process moves to Step 105. In the case where the communications between the in-vehicle communication device 110 and the roadside machine have not occurred, the process moves to Step 109.

The application processing unit 117 reads the encrypted IC card information from the encrypted data storage unit 115, and decrypts the same using the encryption processing unit 116 in Step 105 (S105).

Next, in Step 106 (S106), the application processing unit 117 performs a predetermined charging process using the IC card information obtained in Step 105. Accordingly, for example, data to be transmitted to the roadside machine is generated.

Next, the application processing unit 117 communicates with the roadside machine using the ITS communication processing unit 114 and the like in Step 107 (S107). The step continues until the communication process is finished (No in Step 108). When the communication process is completed, the process returns to Step 104 (Yes in Step 108).

It should be noted that the in-vehicle communication device 110 may receive information from the roadside machine in Step 107. In this case, for example, the application processing unit 117 may store the information received from the roadside machine into the encrypted data storage unit 115 as the entrance information or the exit information in Step 107. Namely, the application processing unit 117 may update the information stored in the encrypted data storage unit 115. Hereinafter, information newly stored into the encrypted data storage unit 115 other than the IC card information will be referred to as update information. The encryption by the encryption processing unit 116 is performed before the update information is stored into the encrypted data storage unit 115. As described above, the IC card information and the update information are stored into the encrypted data storage unit 115 after being encrypted by the encryption processing unit 116. Therefore, the secrecy of these pieces of information can be kept.

In the case where the update information other than the IC card information is stored in the encrypted data storage unit 115, the application processing unit 117 may read the update information (Step 105) and may generate the transmission data (Step 106). Accordingly, for example, the in-vehicle communication device 110 may transmit the entrance information stored in the encrypted data storage unit 115 to the roadside machine of the exit of the toll road.

On the other hand, the application processing unit 117 determines in Step 109 (S109) whether or not the key switch of the vehicle in which the in-vehicle communication device 110 is mounted has been turned off. It should be noted that the determination whether or not the key switch has been turned off can be made by, for example, allowing the application processing unit 117 to obtain information indicating that the key switch has been turned off from the vehicle control unit 600 through the network control unit 200. It should be noted that the power supply of the in-vehicle communication device 110 is not turned off immediately after the key switch of the vehicle is turned off in the embodiment. For example, the in-vehicle communication device 110 controls, independently from the key switch, power feeding from a battery mounted in the vehicle using a power supply control circuit (not shown) mounted in the in-vehicle communication device 110. In the case where the key switch of the vehicle has not been turned off (No in Step 109), the process returns to Step 104. On the contrary, in the case where the key switch of the vehicle has been turned off (Yes in Step 109), the process moves to Step 110.

The application processing unit 117 writes the update information in the encrypted data storage unit 115 into the IC card 150 in Step 110 (S110).

Next, the application processing unit 117 erases the information stored in the encrypted data storage unit 115 in Step 111 (Sill) . Namely, after writing the update information into the IC card 150, the application processing unit 117 erases the IC card information and the update information stored in the encrypted data storage unit 115. Accordingly, the IC card information and the update information stored in the encrypted data storage unit 115 are erased. Thus, these pieces of information can be prevented from being stolen from the in-vehicle communication device 110. When the erasing of the encrypted data storage unit 115 is completed, the application processing unit 117 controls the power supply of the in-vehicle communication device 110 to be turned off.

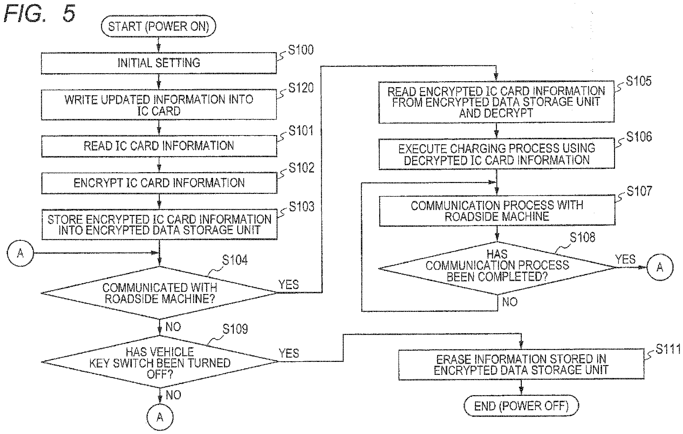

The above-described flowchart shows an example in which the update information contained in the encrypted data storage unit 115 is written into the IC card 150 at the timing when the power supply of the in-vehicle communication device 110 is turned off. However, as described above, the update information may be written into the IC card 150 when the power supply of the in-vehicle communication device 110 is switched to on. Fig. 5 is a flowchart for showing another example of the operation of the in-vehicle communication device 110. The flowchart shown in Fig. 5 is different in the timing of the writing into the IC card 150 from that shown in Fig. 4, but the other flows are the same. Namely, instead of Step 110 of the flowchart of Fig. 4, Step 120 is added immediately after (for example, immediately after Step 100) the power supply of the in-vehicle communication device 110 is turned on in the flowchart shown in Fig. 5. In Step 120, the update information contained in the encrypted data storage unit 115 is written into the IC card 150 as similar to Step 110 of Fig. 4. Namely, in Step 120, the update information stored in the encrypted data storage unit 115 until the in-vehicle communication device 110 was activated the last time is written into the IC card 150.

It should be noted that the writing into the IC card 150 may be performed at both timings when the power supply of the in-vehicle communication device 110 is switched to on and off. Further, the writing into the IC card 150 may be performed when the IC card 150 is inserted in a state where the power supply of the in-vehicle communication device 110 is turned on.

In addition, in the flowchart shown in each of Fig. 4 and Fig. 5, the IC card information is stored into the encrypted data storage unit 115 as a non-volatile memory at the timing when the power supply of the in-vehicle communication device 110 is turned on. However, the information may be stored into the non-volatile memory at timing different from the above. For example, the IC card information may be stored into a volatile memory such as a RAM at timing when the power supply of the in-vehicle communication device 110 is turned on. Thereafter, the IC card information and the update information stored in the volatile memory may be stored into the non-volatile memory at timing when a communication failure between the IC card 150 and the in-vehicle communication device 110 occurs. Namely, the charging process using the information of the non-volatile memory may be performed at the time of the communication failure between the IC card 150 and the in-vehicle communication device 110. In the case where no communication failure occurs, the charging process may be performed using the information stored in the IC card 150 or the information copied to the volatile memory from the IC card 150. It should be noted that the in-vehicle communication device 110 may be operated so as not to access the IC card 150 at timing of executing the communications with the roadside machine as shown in the flowchart shown in each of Fig. 4 and Fig. 5. In other words, the in-vehicle communication device 110 may be controlled so as not to access the IC card 150 at timing other than when the power supply of the in-vehicle communication device 110 is switched to on, when the power supply is switched to off, and when the IC card 150 is inserted.

Further, the writing process is performed without confirming whether or not the IC card 150 into which the information is written is proper as an IC card into which the information is written in the flowchart shown in each of Fig. 4 and Fig. 5. However, the confirmation of whether or not the IC card into which the information is written is proper may be performed prior to the writing process. For example, in the case where the IC card 150 from which the IC card information is read matches the IC card 150 into which the update information is written, the application processing unit 117 may write the update information into the IC card 150. It should be noted that the application processing unit 117 may determine the match of the IC card 150 using, for example, the ID (identification information) of the IC card 150 in this case. According to such a configuration, it is possible to suppress the information from being written into another IC card 150.

Further, in the case where a period of time elapsing from the writing of the IC card information or the update information into the encrypted data storage unit 115 is less than a preliminarily-set period of time, the application processing unit 117 may write the update information into the IC card 150. Namely, in the case where the elapsed time exceeds an elapsed time that is normally assumed in a general use mode of the in-vehicle communication device 110, the application processing unit 117 does not need to write the information. With such a configuration, it is possible to suppress illegal writing of information.

The first embodiment has been described above in detail. In the in-vehicle communication device 110, the IC card information stored in the IC card 150 and the update information generated in the communications with the roadside machine are stored into the encrypted data storage unit 115. Since the encrypted data storage unit 115 is a non-volatile memory, the IC card information and the update information can be continuously held even when the power supply of the in-vehicle communication device 110 is turned off. Therefore, even if the power supply of the in-vehicle communication device 110 is turned off once, the communications with the roadside machine can be performed using the information stored in the encrypted data storage unit 115. Therefore, when the in-vehicle communication device 110 communicates with the roadside machine, the communications with the roadside machine can be performed without reading the information of the IC card 150. Thus, even if a communication failure between the in-vehicle communication device 110 and the IC card 150 occurs due to vibrations during the travelling of the vehicle prior to the communications with the roadside machine, the in-vehicle communication device 110 can normally communicate with the roadside machine using the information of the encrypted data storage unit 115. Namely, the number of errors generated in relation to the charging process caused by the communication failure between the IC card 150 and the in-vehicle communication device 110 can be reduced. It should be noted that the electric power required to read the information from the encrypted data storage unit 115 that is a memory in the in-vehicle communication device 110 is generally small as compared to that required to read the information from the IC card 150, and a period of time required to read the same is short. Thus, power saving and an improvement in access performance can be advantageously realized by using the information of the encrypted data storage unit 115.

Further, the in-vehicle communication device 110 writes the update information into the IC card 150 at, at least, either timing when the power supply of the in-vehicle communication device 110 is switched to on or off. Namely, the in-vehicle communication device 110 does not need to write the information into the IC card 150 every time the in-vehicle communication device 110 communicates with the roadside machine. Therefore, the number of errors generated in relation to the writing process into the IC card 150 caused by the communication failure can be reduced.

As described above, the in-vehicle communication device 110 does not need to communicate with the IC card 150 when the in-vehicle communication device 110 communicates with the roadside machine. Namely, the in-vehicle communication device 110 does not need to access the IC card 150 every time the in-vehicle communication device 110 communicates with the roadside machine. Accordingly, the number of errors generated in the in-vehicle communication device 110 caused by the communication failure between the in-vehicle communication device 110 and the IC card 150 can be reduced.

### <Second Embodiment>

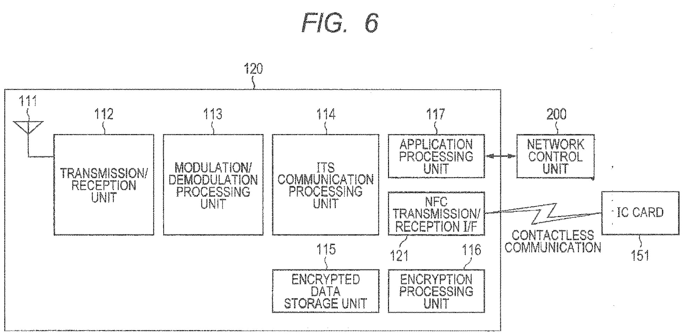

In the description of the first embodiment, a contact-type IC card is used for the in-vehicle communication device 110. In the embodiment, an in-vehicle communication device 120 for which a contactless IC card is used will be described. The in-vehicle communication device 120 is different from the in-vehicle communication device 110 according to the first embodiment in the configuration of the ETC/DSRC communication function 103. Fig. 6 is a block diagram for showing an example of a configuration of the in-vehicle communication device 120 according to the second embodiment that realizes the ETC/DSRC communication function 103. As shown in Fig. 6, the in-vehicle communication device 120 is different from the in-vehicle communication device 110 in that the IC card I/F 118 is replaced by an NFC transmission/reception I/F 121.

The NFC transmission/reception I/F 121 is an interface that performs contactless communications with an IC card 151 by means of NFC (Near Field Communication) . Here, the IC card 151 is a contactless IC card, and is a card into which information similar to that stored in the contact-type IC card 150 is stored. Namely, the in-vehicle communication device 120 transmits and receives data by performing wireless communications with the contactless IC card 151 in the embodiment. It should be noted that the NFC transmission/reception I/F 121 corresponds to the interface 3 of Fig. 1.

The in-vehicle communication device 120 according to the second embodiment performs processes similar to those performed by the in-vehicle communication device 110 according to the first embodiment. Namely, the second embodiment is the same as the first embodiment except that the IC card I/F 118 in the first embodiment is replaced by the NFC transmission/reception I/F 121 and the IC card 150 is replaced by the IC card 151.

In the second embodiment, contactless communications can be performed. Therefore, a communication failure between the IC card and the in-vehicle communication device due to a contact failure does not occur. Further, even if a communication failure occurs between the IC card 151 and the in-vehicle communication device 120 due to another factor, the process similar to the first embodiment is performed in the second embodiment. Thus, the number of errors generated in the in-vehicle communication device 120 caused by the communication failure between the in-vehicle communication device 120 and the IC card 151 can be reduced. It should be noted that an antenna for NFC wireless communications is needed as the NFC transmission/reception I/F 121. However, since the antenna can be realized using a pattern antenna on the substrate, it is possible to suppress the cost from increasing as compared to a case in which a contact-type IC card is used. On the other hand, since a connector with a contact-type IC card is not needed, the cost can be accordingly reduced.

### <Third Embodiment>

Next, a third embodiment will be described. In the first embodiment and the second embodiment, the IC card information is directly read from the IC card. In the embodiment, an in-vehicle communication device 130 that obtains IC card information put in a server such as an cloud on the Internet through the communication function (the LTE/5G communication function 101 or the Wi-Fi/Bluetooth communication function 102) of the vehicle external communication unit 100 without directly reading the IC card information from the IC card will be described.

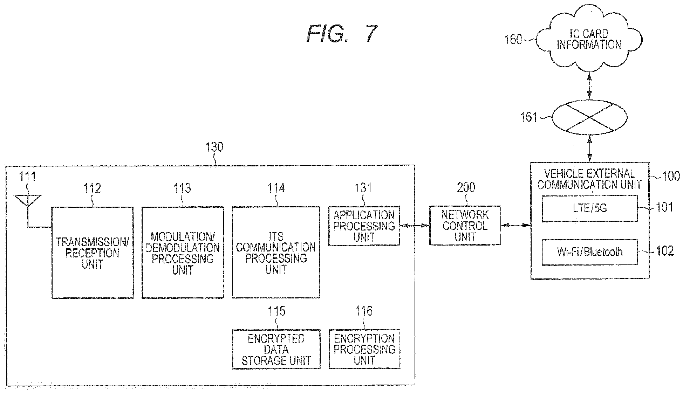

Fig. 7 is a block diagram for showing an example of a configuration of the in-vehicle communication device 130 according to the third embodiment that realizes the ETC/DSRC communication function 103. As shown in Fig. 7, the in-vehicle communication device 130 is different from the in-vehicle communication device 110 according to the first embodiment in that the application processing unit 117 is replaced by an application processing unit 131. It should be noted that the IC card I/F 118 and the NFC transmission/reception I/F 121 are not needed because it is not necessary to communicate with the IC card in the embodiment as described above.

The application processing unit 131 is different from the application processing unit 117 in that information is transmitted and received to/from a server 160 through the network control unit 200 and the vehicle external communication unit 100 in addition to the above-described processes of the application processing unit 117. The server 160 stores IC card information, namely, predetermined information such as personal information for using a system that automatically collects a toll of a toll road. The server 160 is connected to the Internet 161, and can be accessed through the LTE/5G communication function 101 or the Wi-Fi/Bluetooth communication function 102 in the vehicle external communication unit 100. The network control unit 200 controls information received form the server 160 to be output to the in-vehicle communication device 130. Accordingly, the application processing unit 131 can obtain the IC card information from the server 160. Namely, the IC card information used by the in-vehicle communication device 130 is not information directly read from the IC card, but information read from the server 160 in the embodiment. Further, the network control unit 200 controls information from the application processing unit 131 to be transmitted to the server 160 using the vehicle external communication unit 100. Accordingly, the update information can be transmitted to the server 160. It should be noted that the other processes of the application processing unit 131 are the same as those of the application processing unit 117, and thus the explanation thereof will be omitted.

In the third embodiment, when the power supply of the in-vehicle communication device 130 is turned on, the application processing unit 131 obtains the predetermined information stored in the server 160 from the server 160 through the Internet 161, and stores the same into the encrypted data storage unit 115. In addition, the application processing unit 131 writes the update information stored in the encrypted data storage unit 115 into the server 160 through the Internet 161 at, at least, either timing when the power supply of the in-vehicle communication device 130 is switched to on or off. As described above, it is not necessary to directly access the IC card in the third embodiment. Therefore, a communication failure between the IC card and the in-vehicle communication device due to a contact failure does not occur. Further, even if a communication failure occurs between the sever 160 and the in-vehicle communication device 130 due to some factor, the process similar to the first embodiment is performed in the third embodiment. Thus, the number of errors generated in the in-vehicle communication device 130 caused by the communication failure between the server 160 and the in-vehicle communication device 130 can be reduced.

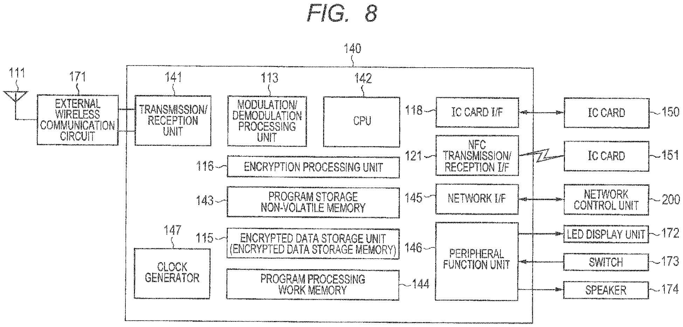

Each embodiment has been described above. Finally, an example of a microcomputer system that can be used in the embodiments will be shown. Fig. 8 is a block diagram for showing an example of a microcomputer system 140 that can be used in each embodiment. The microcomputer system 140 can be configured using, for example1, one chip. As shown in Fig. 8, the microcomputer system 140 has a transmission/reception unit 141, a modulation/demodulation processing unit 113, a CPU 142, an encryption processing unit 116, a program storage non-volatile memory 143, an encrypted data storage unit 115, a program processing work memory 144, an IC card I/F 118, an NFC transmission/reception I/F 121, a network I/F 145, a peripheral function unit 146, and a clock generator 147.

An external wireless communication circuit 171 externally attached to the microcomputer system 140 is connected to the transmission/reception unit 141. The external wireless communication circuit 171 is a circuit that performs wireless communications using an antenna 111. The transmission/reception unit 141 and the external wireless communication circuit 171 correspond to the transmission/reception unit 112 shown in each of Figs. 3, 6, and 7. Further, the program storage non-volatile memory 143 is a non-volatile memory that stores programs and the like for performing the processes of the ITS communication processing unit 114 and the application processing unit 117. When the CPU 142 executes these programs, the processes of the ITS communication processing unit 114 and the application processing unit 117 are executed. The program processing work memory 144 is a volatile memory such as a RAM used when the processes of the ITS communication processing unit 114 and the application processing unit 117 are executed. The network I/F 145 is an interface that connects the in-vehicle communication devices 110, 120, and 130 to the network control unit 200. The peripheral function unit 146 is a circuit that controls peripheral devices (for example, an LED (light emitting diode) display unit 172, a switch 173, a speaker 174, and the like) provided in the in-vehicle communication devices 110, 120, and 130. The clock generator 147 is a circuit that supplies a clock to each constitutional element of the microcomputer system 140.

It should be noted that the microcomputer system 140 includes both of the IC card I/F 118 and the NFC transmission/reception I/F 121 in the configuration shown in Fig. 8, but may include either of them. Namely, in the case where the contact-type IC card 150 is used, the microcomputer system 140 does not need to include the NFC transmission/reception I/F 121. Likewise, in the case where the contactless IC card 151 is used, the microcomputer system 140 does not need to include the IC card I/F 118. Further, in the case where the IC card is not accessed as in the third embodiment, the microcomputer system 140 does not need to include the IC card I/F 118 and the NFC transmission/reception I/F 121.

Some or all of the above-described embodiments can be described as the following additional statements, but are not limited to the following.

### (Additional Statement 1)

An in-vehicle communication device comprising:
a communication unit that performs a first communication with a roadside machine of a system that automatically collects a toll of a toll road;
an interface that performs a second communication with an IC (integrated circuit) card in which predetermined information for using the system is stored;
a non-volatile memory; and
a processing unit that executes a process of collecting a toll using the communication unit,
wherein the processing unit reads the predetermined information stored in the IC card through the interface, and stores the same into the non-volatile memory,
wherein the processing unit uses first storage information or second storage information during the execution of the process using the communication unit,
wherein the processing unit writes the second storage information stored in the non-volatile memory into the IC card through the interface at, at least, either timing when the power supply of the in-vehicle communication device is switched to on or off,
wherein the first storage information is the predetermined information stored in the non-volatile memory after being read from the IC card, and
wherein the second storage information is information stored in the non-volatile memory after being obtained in the process.

### (Additional Statement 2)

The in-vehicle communication device according to Additional Statement 1,
wherein the processing unit writes the second storage information stored in the non-volatile memory into the IC card through the interface when the power supply of the in-vehicle communication device is switched to on.

### (Additional Statement 3)

The in-vehicle communication device according to Additional Statement 1,
wherein the processing unit erases the first storage information and the second storage information stored in the non-volatile memory after the second storage information is written into the IC card.

### (Additional Statement 4)

The in-vehicle communication device according to Additional Statement 1, further comprising an encryption processing unit that encrypts data,
wherein the first storage information and the second storage information are encrypted by the encryption processing unit.

### (Additional Statement 5)

The in-vehicle communication device according to Additional Statement 1,
wherein the IC card is a contact-type IC card.

### (Additional Statement 6)

The in-vehicle communication device according to Additional Statement 1,
wherein the IC card is a contactless IC card,

### (Additional Statement 7)

The in-vehicle communication device according to Additional Statement 1,
wherein the processing unit writes the second storage information into the IC card in the case where the IC card from which the predetermined information is read matches the IC card into which the second storage information is written.

### (Additional Statement 8)

The in-vehicle communication device according to Additional Statement 1,
wherein the processing unit writes the second storage information into the IC card in the case where a period of time elapsing from the writing of the first storage information or the second storage information into the non-volatile memory is less than a preliminarily-set period of time.

### (Additional Statement 9)

An in-vehicle communication device comprising:
a communication unit that communicates with a roadside machine of a system that automatically collects a toll of a toll road;
a non-volatile memory; and
a processing unit that executes a process of collecting a toll using the communication unit,
wherein the processing unit obtains predetermined information for using the system from a server that stores the predetermined information through the Internet, and stores the same into the non-volatile memory,
wherein the processing unit uses first storage information or second storage information during the execution of the process using the communication unit,
wherein the processing unit writes the second storage information stored in the non-volatile memory into the server through the Internet at, at least, either timing when the power supply of the in-vehicle communication device is switched to on or off,
wherein the first storage information is the predetermined information stored in the non-volatile memory after being read from the server, and
wherein the second storage information is information stored in the non-volatile memory after being obtained in the process.

### (Additional Statement 10)

A toll collecting method comprising the steps of:
reading predetermined information stored in an IC (integrated circuit) card to use a system that automatically collects a toll of a toll road through an interface for communicating with the IC card;
storing the read predetermined information into a non-volatile memory;
using first storage information or second storage information when a process of collecting a toll accompanied by communications with a roadside machine of the system is executed; and
writing the second storage information stored in the non-volatile memory into the IC card through the interface at, at least, either timing when the power supply of an in-vehicle communication device is switched to on or off,
wherein the first storage information is the predetermined information stored in the non-volatile memory after being read from the IC card, and
wherein the second storage information is information stored in the non-volatile memory after being obtained in the process.

### (Additional Statement 11)

A toll collecting method comprising the steps of:
obtaining predetermined information for using a system that automatically collects a toll of a toll road from a server that stores the predetermined information through the Internet;
storing the obtained predetermined information into a non-volatile memory;
using first storage information or second storage information when a process of collecting a toll accompanied by communications with a roadside machine of the system is executed; and
writing the second storage information stored in the non-volatile memory into the server through the Internet at, at least, either timing when the power supply of an in-vehicle communication device is switched to on or off,
wherein the first storage information is the predetermined information stored in the non-volatile memory after being read from the server, and
wherein the second storage information is information stored in the non-volatile memory after being obtained in the process.

### (Additional Statement 12)

A vehicle in which a communication device is mounted,
wherein the communication device comprising:
a communication unit that performs a first communication with a ' roadside machine of a system that automatically collects a toll of a toll road;
an interface that performs a second communication with an IC (integrated circuit) card in which predetermined information for using the system is stored;
a non-volatile memory; and
a processing unit that executes a process of collecting a toll using the communication unit,
wherein the processing unit reads the predetermined information stored in the IC card through the interface, and stores the same into the non-volatile memory,
wherein the processing unit uses first storage information or second storage information during the execution of the process using the communication unit,
wherein the processing unit writes the second storage information stored in the non-volatile memory into the IC card through the interface at, at least, either timing when the power supply of the communication device is switched to on or off,
wherein the first storage information is the predetermined information stored in the non-volatile memory after being read from the IC card, and
wherein the second storage information is information stored in the non-volatile memory after being obtained in the process.

### (Additional Statement 13)

A vehicle in which a communication device is mounted,
wherein the communication device comprising:
a communication unit that communicates with a roadside machine of a system that automatically collects a toll of a toll road;
a non-volatile memory; and
a processing unit that executes a process of collecting a toll using the communication unit,
wherein when the power supply of the communication device is turned on, the processing unit obtains predetermined information for using the system from a server that stores the predetermined information through the Internet, and stores the same into the non-volatile memory,
wherein the processing unit uses first storage information or second storage information during the execution of the process using the communication unit,
wherein the processing unit writes the second storage information stored in the non-volatile memory into the server through the Internet at, at least, either timing when the power supply of the communication device is switched to on or off,
wherein the first storage information is the predetermined information stored in the non-volatile memory after being read from the server, and
wherein the second storage information is information stored in the non-volatile memory after being obtained in the process.

The invention achieved by the inventors has been described above in detail on the basis of the embodiments. However, it is obvious that the present invention is not limited to the already-described embodiments, and can be variously changed without departing from the scope thereof.

## Claims

1. An in-vehicle communication device comprising:
a communication unit that performs a first communication with a roadside machine of a system that automatically collects a toll of a toll road;
an interface that performs a second communication with an IC (integrated circuit) card in which predetermined information for using the system is stored;
a non-volatile memory; and
a processing unit that executes a process of collecting a toll using the communication unit,
wherein the processing unit reads the predetermined information stored in the IC card through the interface, and stores the same into the non-volatile memory,
wherein the processing unit uses first storage information or second storage information during the execution of the process using the communication unit,
wherein the processing unit writes the second storage information stored in the non-volatile memory into the IC card through the interface at, at least, either timing when the power supply of the in-vehicle communication device is switched to on or off,
wherein the first storage information is the predetermined information stored in the non-volatile memory after being read from the IC card, and
wherein the second storage information is information stored in the non-volatile memory after being obtained in the process.

2. The in-vehicle communication device according to Claim 1,
wherein the processing unit writes the second storage information stored in the non-volatile memory into the IC card through the interface when the power supply of the in-vehicle communication device is switched to on.

3. The in-vehicle communication device according to Claim 1 or 2,
wherein the processing unit erases the first storage information and the second storage information stored in the non-volatile memory after the second storage information is written into the IC card.

4. The in-vehicle communication device according to one of Claims 1 to 3, further comprising an encryption processing unit that encrypts data,
wherein the first storage information and the second storage information are encrypted by the encryption processing unit.

5. The in-vehicle communication device according to one of Claims 1 to 4,
wherein the IC card is a contact-type IC card.

6. The in-vehicle communication device according to one of Claims 1 to 4,
wherein the IC card is a contactless IC card.

7. The in-vehicle communication device according to one of Claims 1 to 6,
wherein the processing unit writes the second storage information into the IC card in the case where the IC card from which the predetermined information is read matches the IC card into which the second storage information is written.

8. The in-vehicle communication device according to one of Claims 1 to 6,
wherein the processing unit writes the second storage information into the IC card in the case where a period of time elapsing from the writing of the first storage information or the second storage information into the non-volatile memory is less than a preliminarily-set period of time.

9. An in-vehicle communication device comprising:
a communication unit that communicates with a roadside machine of a system that automatically collects a toll of a toll road;
a non-volatile memory; and
a processing unit that executes a process of collecting a toll using the communication unit,
wherein the processing unit obtains predetermined information for using the system from a server that stores the predetermined information through the Internet, and stores the same into the non-volatile memory,
wherein the processing unit uses first storage information or second storage information during the execution of the process using the communication unit,
wherein the processing unit writes the second storage information stored in the non-volatile memory into the server through the Internet at, at least, either timing when the power supply of the in-vehicle communication device is switched to on or off,
wherein the first storage information is the predetermined information stored in the non-volatile memory after being read from the server, and
wherein the second storage information is information stored in the non-volatile memory after being obtained in the process.

10. A toll collecting method comprising the steps of:
reading predetermined information stored in an IC (integrated circuit) card to use a system that automatically collects a toll of a toll road through an interface for communicating with the IC card;
storing the read predetermined information into a non-volatile memory;
using first storage information or second storage information when a process of collecting a toll accompanied by communications with a roadside machine of the system is executed; and
writing the second storage information stored in the non-volatile memory into the IC card through the interface at, at least, either timing when the power supply of an in-vehicle communication device is switched to on or off,
wherein the first storage information is the predetermined information stored in the non-volatile memory after being read from the IC card, and
wherein the second storage information is information stored in the non-volatile memory after being obtained in the process.
